# DEMANDE DE BREVET EUROPEEN

(11) **EP 4 807 934 A1**
(43) Date de publication de la demande: **16.09.2026**
(21) Numéro de dépôt: 26163831.6
(22) Date de dépôt: 11.03.2026
(51) Int. Cl.: H02J 3/14, H02J 3/26

(54) **PROCEDE D'EQUILIBRAGE DES CHARGES D'UN RESEAU ELECTRIQUE POLYPHASE, DISPOSITIF D'EQUILIBRAGE ET PROGRAMME D'ORDINATEUR CORRESPONDANT**

(30) Priorité: 14.03.2025 FR 2502587
(71) Demandeur: SAGEMCOM ENERGY & TELECOM SAS, 92270 Bois-Colombes (FR)
(72) Inventeur: GRINCOURT, Christophe, 92270 BOIS-COLOMBES (FR)
(74) Mandataire: Cabinet Le Guen Maillet

(57) **Abrégé**

Il est proposé ici un procédé d'équilibrage des charges d'un réseau électrique polyphasé dont chaque phase alimente en énergie électrique au moins un point de raccordement d'une installation électrique d'un abonné. Le procédé est implémenté dans un dispositif d'équilibrage connecté à une pluralité de phases et comprenant une pluralité de relais électromécaniques, chaque relais électromécanique étant adapté pour connecter une phase de ladite pluralité à une phase de sortie dudit point de raccordement. Le procédé comprend : après réception (401) d'une demande de modification de raccordement de phase, exécuter (402 à 411) une étape de modification de raccordement de phase pour basculer d'un raccordement, *via* un premier relais électromécanique, à une première phase à laquelle est initialement connectée ladite phase de sortie, à un raccordement, *via* un deuxième relais électromécanique, de ladite phase de sortie à une deuxième phase dudit réseau électrique.

## Description

### DOMAINE TECHNIQUE

La présente divulgation concerne la gestion des réseaux de distribution d'électricité polyphasés. Plus particulièrement, la présente divulgation concerne l'équilibrage des charges de tels réseaux de distribution d'électricité polyphasés.

### ETAT DE LA TECHNIQUE ANTERIEURE

Les réseaux de distribution d'électricité (aussi appelés par la suite « réseaux électriques » ou « réseaux électriques polyphasés ») sont principalement polyphasés. Plus particulièrement, les réseaux de distribution d'électricité sont en général triphasés. Dans ce cas, l'électricité est distribuée *via* trois conducteurs de phase distincts (aussi appelés par la suite « phases »). Cela permet une utilisation plus efficace de l'énergie en répartissant la charge sur plusieurs conducteurs de phase.

Le terme « charge » fait référence à la quantité d'électricité demandée par les utilisateurs (aussi appelé par la suite « abonnés ») à un instant donné. Elle est directement liée à la phase du réseau de distribution d'électricité polyphasé car la charge peut être répartie sur l'ensemble des phases ou concentrée sur une seule phase. Une distribution équilibrée de la charge entre les phases permet d'optimiser le fonctionnement du réseau de distribution d'électricité et de prévenir les surcharges sur une phase spécifique. Ainsi, l'équilibrage des charges entre les différentes phases est essentiel pour les fournisseurs d'électricité.

Lors de l'installation d'un abonné, la phase du réseau sur laquelle il est connecté est choisie de manière définitive. Cependant, la consommation peut varier d'un abonné à l'autre et fluctuer dans le temps. Un abonné peut ajouter des appareils à forte consommation (e.g., piscine, jacuzzi, voiture électrique, etc.). Il peut aussi installer des générateurs d'électricité (e.g., panneaux solaires, éoliennes, etc.). Ces ajouts créent un déséquilibre des charges qui ne peut pas être facilement compensé.

Un déséquilibre de charge peut provoquer des fluctuations de tension. Cela perturbe la stabilité du réseau de distribution et peut causer des pannes. Un déséquilibre entraîne également une surchauffe des équipements, surtout des moteurs triphasés. La surchauffe peut dégrader l'isolation des câbles et des équipements. Cela augmente le risque de courts-circuits et de défaillances. En outre, un déséquilibre des charges réduit l'efficacité énergétique et peut endommager les équipements. Dans les systèmes à grande échelle, un déséquilibre persistant peut provoquer des pannes électriques.

L'état actuel de la technique ne propose pas de solutions satisfaisantes pour résoudre ce problème. Il n'existe pas à l'heure actuelle de solution efficace permettant d'équilibrer correctement la distribution de l'énergie entre les phases d'un réseau de distribution d'électricité.

La situation peut donc être améliorée. Il est notamment souhaitable de fournir une solution permettant de répartir de manière optimisée la charge entre les différentes phases du réseau de distribution, assurant ainsi une utilisation plus équilibrée de l'énergie, une réduction des risques de surcharge et une amélioration de la performance énergétique globale du réseau de distribution.

### EXPOSE DE L'INVENTION

Il est proposé ici un procédé d'équilibrage des charges d'un réseau électrique comprenant une pluralité de phases, chaque phase alimentant en énergie électrique au moins un point de raccordement adapté pour raccorder une installation électrique d'un abonné audit réseau électrique. Le procédé est implémenté dans un dispositif d'équilibrage connecté à ladite pluralité de phases, ledit dispositif d'équilibrage comprenant une pluralité de relais électromécaniques, chaque relais électromécanique étant adapté pour connecter une phase de ladite pluralité de phases à une phase de sortie dudit point de raccordement, ladite phase de sortie étant destinée à fournir l'énergie électrique à l'installation électrique de l'abonné. Le procédé comprend : après réception, *via* un module de communication, d'une demande de modification de raccordement de phase, commander une étape de modification de raccordement de phase pour basculer d'un raccordement, *via* un premier relais électromécanique, à une première phase à laquelle est initialement connectée ladite phase de sortie, à un raccordement, *via* un deuxième relais électromécanique, de ladite phase de sortie à une deuxième phase dudit réseau électrique.

Ainsi, en cas de déséquilibre des charges du réseau électrique, il est possible de modifier la phase d'entrée à laquelle un point de raccordement d'une installation électrique d'un abonné est raccordé pour rééquilibrer les charges.

En particulier, ladite étape de modification de raccordement de phase comprend :
- commander une ouverture de tous les relais électromécaniques dudit dispositif d'équilibrage,
- obtenir une première mesure d'une tension en aval des relais électromécaniques, puis, après une période prédéterminée, obtenir une deuxième mesure d'une tension en aval des relais électromécaniques,
- obtenir une troisième mesure d'une tension en aval des relais électromécaniques à l'issue de la période prédéterminée, lorsque ladite première mesure est différente de 0 et ladite deuxième mesure est égale à 0,
- commander une fermeture dudit deuxième relais électromécanique si : (i) ladite première mesure est égale à 0 et ladite deuxième mesure est égale à 0, ou (ii) ladite première mesure est différente de 0, ladite deuxième mesure est égale à 0 et ladite troisième mesure est égale à 0.

Avantageusement, cette modification de raccordement de phase d'entrée est sécurisée par un contrôle de la tension en aval des relais électromécaniques. Ces relais connectent l'une des phases d'entrée du réseau à la phase de sortie du point de raccordement alimentant l'installation électrique de l'abonné.

En outre, ladite étape de modification de raccordement de phase comprend en outre : commander une fermeture dudit premier relais électromécanique si : (i) ladite première mesure est différente de 0 et ladite deuxième mesure est différente de 0, ou (ii) ladite première mesure est différente de 0, ladite deuxième mesure est différente de 0 et ladite troisième mesure est différente de 0.

Selon un mode de réalisation, ladite période prédéterminée est de 20 ms lorsque ledit réseau électrique a une fréquence de 50Hz ou 16,7 ms lorsque ledit réseau électrique a une fréquence de 60Hz ou une seconde, préférentiellement de 20 ms lorsque ledit réseau électrique a une fréquence de 50Hz ou 16,7 lorsque ledit réseau électrique a une fréquence de 60Hz.

Avantageusement, les mesures de tension sont effectuées à la période du signal du réseau électrique considéré (50Hz ou 60Hz) afin de limiter le temps de coupure de l'électricité.

Selon un mode de réalisation, commander une fermeture dudit premier relais électromécanique comprend en outre : transmettre un message d'alerte à un système d'information d'un fournisseur d'électricité.

Il est également proposé un dispositif d'équilibrage des charges d'un réseau électrique comprenant une pluralité de phases, chaque phase alimentant en énergie électrique au moins un point de raccordement adapté pour raccorder une installation électrique d'un abonné audit réseau électrique. Le dispositif d'équilibrage est connecté à ladite pluralité de phases. Le dispositif d'équilibrage comprend une pluralité de relais électromécaniques, chaque relais électromécanique étant adapté pour connecter une phase de ladite pluralité de phases à une phase de sortie dudit point de raccordement, ladite phase de sortie étant destinée à fournir l'énergie électrique à l'installation électrique de l'abonné. Le dispositif d'équilibrage comprend de la circuiterie électronique configurée pour : après réception, *via* un module de communication, d'une demande de modification de raccordement de phase, commander une étape de modification de raccordement de phase pour basculer d'un raccordement, *via* un premier relais électromécanique, à une première phase à laquelle est initialement connectée ladite phase de sortie, à un raccordement, *via* un deuxième relais électromécanique, de ladite phase de sortie à une deuxième phase dudit réseau électrique.

Il est également proposé ici un compteur électrique comprenant un dispositif d'équilibrage tel que décrit précédemment.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont lues et exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
**[****Fig. 1****]** illustre schématiquement un exemple d'environnement de mise en œuvre du procédé d'équilibrage des charges d'un réseau électrique polyphasé, selon un mode de réalisation ;
**[****Fig. 2****]** illustre schématiquement un exemple de plateforme matérielle permettant d'implémenter, sous forme de circuiterie électronique, un dispositif d'équilibrage des charges d'un réseau électrique polyphasé, selon un mode de réalisation ;
**[****Fig. 3A], [Fig. 3B****]** et **[****Fig. 3C****]** illustrent schématiquement différents exemples d'architecture matérielle d'un dispositif d'équilibrage des charges d'un réseau électrique polyphasé, selon des modes de réalisation particuliers ;
**[****Fig.4****]** illustre schématiquement les étapes du procédé d'équilibrage des charges d'un réseau électrique polyphasé, selon un mode de réalisation.

### EXPOSE DETAILLE DE MODES DE REALISATION

Le principe général de la présente divulgation consiste à modifier, à tout moment, en fonction de la charge de chacune des phases du réseau électrique, la (ou les) phase(s) à laquelle (auxquelles) est (sont) connectée(s) initialement un point de raccordement monophasé ou polyphasé d'une installation électrique d'un abonné. Plus particulièrement, la présente divulgation concerne un procédé permettant de basculer d'une connexion à une (ou des) phase(s) à laquelle (auxquelles) le point de raccordement est initialement connecté vers une connexion à une (ou des) nouvelle(s) phase(s), en fonction de la charge de chacune des phases du réseau électrique.

En effet, comme évoqué précédemment, le choix de la phase du réseau électrique à laquelle le point de raccordement de l'abonné est connectée est réalisé de manière définitive, lors du raccordement de l'installation électrique de l'abonné au réseau électrique. Il n'est donc pas possible d'équilibrer les charges du réseau électrique en modifiant le choix de la phase à laquelle est connecté le point de raccordement de l'installation électrique de l'abonné.

Le terme « point de raccordement monophasé ou polyphasé » (aussi appelé « point de raccordement ») fait référence ici à un point de connexion de l'installation électrique de l'abonné qui est connecté à une ou plusieurs phases dites « d'entrée » du réseau de distribution d'électricité. Ce point de raccordement est soit monophasé (i.e., une seule phase « sortante » alimente l'installation électrique de l'abonné), soit polyphasé (i.e., plusieurs phases « sortantes » alimentent l'installation électrique de l'abonné). Par la suite, les termes « phase d'entrée » font référence à une phase du réseau électrique arrivant au point de raccordement, et les termes « phase de sortie » font référence à la phase partant du point de raccordement et fournissant l'électricité à l'installation de l'abonné.

Ainsi, le point de raccordement constitue une interface entre l'installation électrique de l'abonné et le réseau électrique alimentant en électricité l'installation domestique ou industrielle d'un abonné. En général, ce point de raccordement est équipé d'un compteur électrique, permettant la mesure de l'électricité fournie à l'abonné.

L'objectif est donc de pouvoir changer la ou les phases du réseau électrique à laquelle, ou auxquelles, sont initialement connectées la ou les phases de sortie du point de raccordement de l'installation électrique de l'abonné, en fonction d'un niveau de charge de chaque phase du réseau électrique, afin de pouvoir optimiser l'équilibrage des charges des phases du réseau électrique lorsque cela est nécessaire.

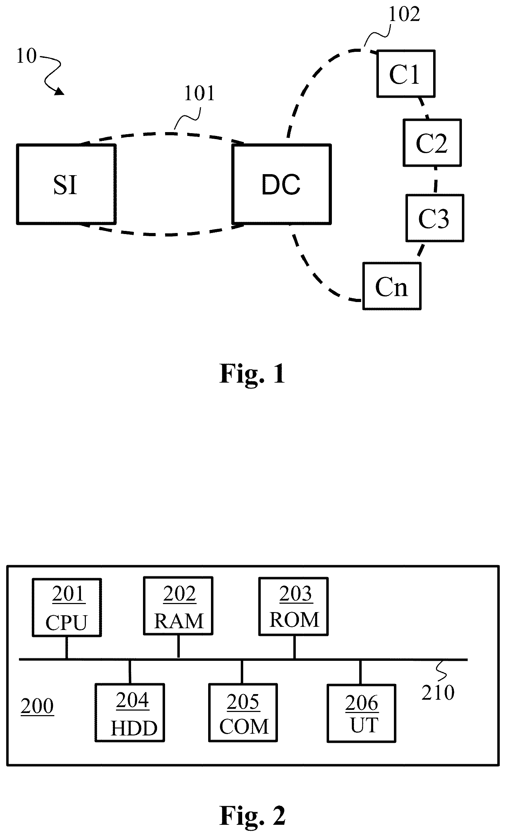

La **Fig. 1** illustre ainsi schématiquement un exemple d'environnement de mise en œuvre du procédé d'équilibrage des charges d'un réseau électrique polyphasé, selon un mode de réalisation.

Dans cet exemple, non limitatif, un réseau d'acheminement d'électricité achemine l'électricité des centrales de production vers les utilisateurs finaux (ou abonnés), comme les foyers ou les entreprises. Un tel réseau d'acheminement d'électrique comprend notamment un réseau de transport (qui transporte l'électricité sur de longues distances à haute tension) et un réseau de distribution 103 (qui amène l'électricité à des niveaux de tension plus faibles pour la consommer dans les foyers ou les entreprises). Le réseau de distribution d'électricité 103 comprend deux types de réseaux : un réseau moyenne tension 1031 comprenant des lignes moyenne tension (tension comprise entre 15 kV et 30 kV) et un réseau basse tension 1032 comprenant des lignes basse tension (tension de 230V ou 400V). Un transformateur HTA/BT (ou poste de transformation HTA/BT) compris dans un sous-répartiteur 102 assure la liaison entre les lignes moyenne tension et les lignes basse tension. En particulier, le transformateur HTA/BT abaisse les moyennes tensions à une tension plus faible (220 V à 400 V) pour la rendre compatible avec l'utilisation domestique et industrielle. Ainsi, les lignes basse tension du réseau basse tension 1032 servent à alimenter en électricité les installations électriques des abonnés depuis le transformateur HTA/BT vers les foyers et entreprises.

Comme évoqué ci-dessus, le réseau de distribution d'électricité 103 est en général polyphasé afin de garantir une répartition équilibrée et efficace de l'énergie électrique. Plus particulièrement, les réseaux électriques haute tension 1031 et basse tension 1032 sont composés, en général, de trois conducteurs de phases distincts L1, L2, L3, respectivement L1', L2', L3' (aussi appelés par la suite « phase ») et, le cas échéant, d'un conducteur de phase neutre (aussi appelé par la suite « neutre »). Le réseau électrique 103 est alors dit « triphasé ». Il est à noter que d'autres types de réseau électrique polyphasé existent, tels que des réseaux électriques comprenant uniquement deux conducteurs de phase (réseau électrique dit « biphasé »).

Il est à noter que par la suite, le réseau électrique considéré est le réseau électrique basse tension 1032 et les phases d'entrée sont les phases notées L1', L2', L3' partant du transformateur HTA/BT du sous-répartiteur 102.

Le réseau électrique 1032 achemine l'électricité jusqu'au point de raccordement (monophasé ou polyphasé) de l'abonné dans son foyer ou son entreprise, où un compteur électrique mesure la consommation d'énergie électrique. Ces compteurs électriques sont parfois équipés d'interfaces de communication permettant la collecte à distance des données de consommation (e.g., compteurs électriques intelligents). Par exemple, les compteurs électriques peuvent intégrer une interface de communication leur permettant de communiquer *via* un réseau de type Courants Porteurs en Ligne (ou CPL), facilitant la transmission des données, à intervalles réguliers ou selon des besoins spécifiques, vers un système d'information (« *Information System* » en anglais) d'un fournisseur d'électricité ou un concentrateur de données, pour leur traitement centralisé. En effet, les systèmes d'information ou les concentrateurs de données (« *Data Concentrator* » en anglais), collectent et centralisent les données de consommation provenant de différents compteurs électriques équipant différents points de raccordement. Les concentrateurs de données répartissent la charge de collecte et agissent comme relais entre les compteurs électriques et les systèmes d'information. Ils jouent un rôle crucial dans la gestion de l'énergie, permettant un suivi en temps réel des consommations et la détection rapide d'éventuelles anomalies ou déséquilibres. Les données collectées sont ensuite transmises au fournisseur d'électricité et traitées pour une gestion optimale de l'ensemble du réseau électrique, facilitant ainsi la maintenance et l'optimisation de ce réseau.

Selon l'exemple (non limitatif) de la **Fig. 1**, un système de gestion 10 de compteurs électriques comporte au moins un système d'information SI et, le cas échéant, au moins un concentrateur de données DC. Le système d'information SI et le concentrateur de données DC sont configurés pour communiquer ensemble *via* un premier réseau de communication 101. Par exemple, le premier réseau de communication 101 est un réseau de communication cellulaire conforme aux spécifications 2G à 5G, LTE-M, ou NB-IoT (« *Narrow Band Internet-of-Things* » en anglais ou « réseau à bande étroite de internet des objets »).

Le ou les concentrateurs de données DC sont configurés pour communiquer, en outre, avec un ensemble de compteurs électriques C1 à Cn *via* un deuxième réseau de communication 102. Le deuxième réseau de communication 102 est, par exemple, un réseau CPL conforme aux spécifications G3-PLC ou PRIME, ou G3-Hybrid ou PRIME-Hybrid.

Dans une variante, le système d'information SI et les compteurs C1, C2, C3, Cn sont configurés pour communiquer ensemble directement (i.e., sans passer par un concentrateur de données DC) *via* un réseau de communication, par exemple conforme aux spécifications 2G à 5G, LTE-M, ou NB-IoT.

Les compteurs électriques C1 à Cn sont installés au niveau du point de raccordement chez l'abonné et sont configurés pour mesurer une consommation, par cet abonné, d'une ressource en électricité qui est distribuée vers des équipements *via* une installation électrique de l'abonné. Les compteurs électriques C1 à Cn sont en outre configurés pour transmettre au système d'information SI directement ou, le cas échéant, *via* le concentrateur de données DC, des données de consommation représentatives de la consommation de l'abonné sur une période prédéterminée. Par exemple les compteurs électriques C1 à Cn transmettent tous les jours des données de consommation journalière.

La Fig. 2 illustre schématiquement un exemple de plateforme matérielle permettant d'implémenter, sous forme de circuiterie électronique, le dispositif d'équilibrage des charges d'un réseau électrique polyphasé, selon un mode de réalisation.

La plateforme matérielle comporte, reliés par un bus de communication 210, un processeur ou CPU (« *Central Processing Unit* » en anglais) 201 ; une mémoire vive RAM (« *Random-Access Memory* » en anglais) 202 ; une mémoire morte 203, par exemple de type ROM (« *Read Only Memory* » en anglais) ou EEPROM (« *Electrically-Erasable Programmable ROM* » en anglais), telle qu'une mémoire Flash ; une unité de stockage, telle qu'un disque dur HDD (« *Hard Disk Drive* » en anglais) 204, ou un lecteur de support de stockage, tel qu'un lecteur de cartes SD (« *Secure Digital* » en anglais) ; et au moins un module de communication COM 205.

Selon un mode de réalisation, le dispositif d'équilibrage 200 comprend en outre un module de traitement UT 206. Le module de traitement UT 206 et le module de communication COM 202 sont configurés pour communiquer ensemble. En outre, le module de traitement UT 206 est configuré pour commander l'ouverture et la fermeture de plusieurs relais électromécaniques (ci-après aussi appelés « relais ») du dispositif d'équilibrage 200. Le module de traitement UT 206 peut ainsi commander la fermeture ou l'ouverture d'un ou plusieurs relais pour connecter/déconnecter une ou des phases d'entrée du réseau électrique à/d'une ou des phases de sortie du point de raccordement fournissant de l'électricité à l'installation électrique de l'abonné. Le module de traitement UT 206 est en outre configuré pour obtenir des mesures de la tension en aval des relais du dispositif d'équilibrage 200 et analyser ces mesures.

Le module de communication COM 205 est configuré pour permettre au dispositif d'équilibrage 200 d'interagir avec le système d'information SI ou le concentrateur de données DC. En particulier, le module de communication COM 205 permet au dispositif d'équilibrage 200 de recevoir, en provenance du système d'information SI directement, ou *via* le concentrateur de données DC, des ordres de modification de raccordement au réseau électrique. Par exemple, le module de communication COM 205 peut être un port de communication CPL, Radio Fréquence, cellulaire...

Le processeur 201 est capable d'exécuter des instructions qui forment un programme d'ordinateur et qui sont chargées dans la mémoire vive 202 à partir de la mémoire morte 203, d'une mémoire externe, d'un support de stockage (tel qu'une carte SD), ou d'un réseau de communication. Lorsque la plateforme matérielle est mise sous tension, le processeur 201 est capable de lire de la mémoire vive 202 les instructions précitées et de les exécuter. Quand elles sont lues depuis la mémoire vive 202 ou un support de stockage et exécutées par le processeur 201, ces instructions (qui forment un programme d'ordinateur) entraînent l'exécution, par le processeur 201, de tout ou partie des étapes ou procédés ou plus largement des séquences de fonctionnement décrites dans la présente divulgation.

Tout ou partie des étapes, procédés et fonctionnements décrits ici peut ainsi être implémenté sous forme logicielle par exécution d'un ensemble d'instructions par une machine programmable, par exemple un processeur de type DSP (« *Digital Signal Processor* » en anglais) ou un microcontrôleur, ou être implémenté sous forme matérielle par une machine ou un composant électronique (« *chip* » en anglais) dédié ou un ensemble de composants électroniques (« *chipset* » en anglais) dédié, par exemple un composant FPGA (« *Field Programmable Gate Array* » en anglais) ou ASIC (« *Application Specific Integrated Circuit* » en anglais). D'une manière générale, le dispositif d'équilibrage 200 comporte de la circuiterie électronique adaptée et configurée pour implémenter tout ou partie des fonctionnements, procédés et étapes décrits ci-après.

Il est à noter que le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

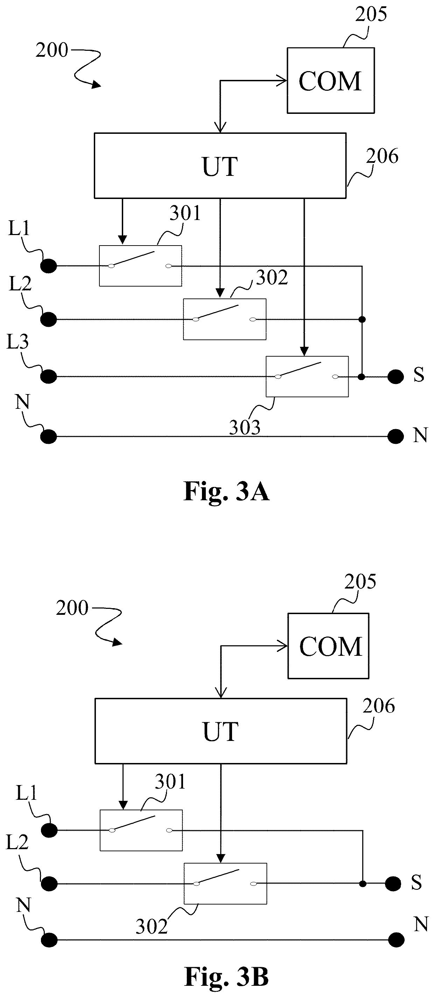

Les **Fig. 3A**, **Fig. 3B** et **Fig**. **3C** illustrent schématiquement différents exemples d'architecture matérielle du dispositif d'équilibrage des charges d'un réseau électrique polyphasé, selon des modes de réalisation particuliers.

Selon un mode de réalisation, le dispositif d'équilibrage 200 est connecté (ou raccordé) à l'ensemble des phases d'un réseau électrique polyphasé. Dans un exemple illustré en **Fig. 3A**, ce réseau électrique polyphasé est un réseau électrique triphasé comprenant trois phases d'entrée L1, L2 et L3 et un neutre N. Dans un autre exemple illustré en **Fig. 3B**, ce réseau électrique polyphasé est un réseau électrique biphasé comprenant uniquement deux phases d'entrée L1 et L2 et un neutre N.

Le dispositif d'équilibrage 200 comprend en outre plusieurs relais électromécaniques (ci-après « relais »), notés 301, 302, 302', 303. Chaque relais 301, 302, 302', 303 est connecté à une phase d'entrée L1, L2, L3 du réseau électrique polyphasé. Dans l'exemple en lien avec la **Fig. 3A**, le dispositif d'équilibrage 200 comprend trois relais 301, 302 et 303 chacun connecté à une phase d'entrée L1, L2 ou L3 du réseau électrique triphasé. Selon l'exemple en lien avec la **Fig. 3B**, le dispositif d'équilibrage 200 comprend deux relais 301 et 302 chacun connecté à une phase d'entrée L1 ou L2 du réseau électrique biphasé.

Le terme « relais électromécanique » fait ici référence à un dispositif électromécanique apte à permettre d'ouvrir ou de fermer un circuit électrique en réponse à un signal de commande, fourni par le module de traitement UT 206. Ce module de traitement UT 206 génère donc un ordre de fermeture ou d'ouverture du relais, activant ainsi son mécanisme pour contrôler le passage du courant dans le circuit.

Ainsi, après réception d'un signal de commande d'ouverture ou de fermeture en provenant du module de traitement UT 206, les relais 301, 302, 302', 303 sont aptes à :
- connecter une ou des phases d'entrée L1, L2, L3 à une ou des phases de sortie du point de raccordement, lorsqu'ils sont dans une configuration « fermée »,
- à déconnecter une ou des phases L1, L2, L3 de la ou des phases de sortie du point de raccordement, lorsqu'ils sont dans une configuration « ouverte ».

Selon un mode de réalisation (voir par exemple **Fig. 3A** et **Fig. 3B**), le dispositif d'équilibrage 200 est configuré pour connecter à une phase d'entrée une unique phase de sortie S d'un point de raccordement monophasé d'un abonné. Comme évoqué précédemment, cette phase de sortie S permet donc de fournir ensuite de l'énergie électrique à l'installation électrique de l'abonné. Ainsi, dans les exemples illustrés en **Fig. 3A** et **Fig. 3B**, un seul relais 301, 302 ou 303 doit être fermé pour connecter l'une des phases d'entrée L1, L2 ou L3 à la phase de sortie S du point de raccordement. Il est à noter que les autres relais 301, 302, ou 303 sont ouverts pour éviter qu'une autre phase d'entrée L1, L2 ou L3 soit connectée à la phase de sortie S en même temps que celle déjà connectée. En effet, dans un réseau polyphasé il est essentiel de ne connecter qu'une seule phase du réseau électrique polyphasé au point de raccordement monophasé de l'installation de l'abonné pour maintenir une tension de 230V adaptée. Si deux phases (e.g., les phases L1 et L2) sont connectées (i.e., relais 301 et 302 fermés) en même temps, cela crée un risque de surtension et d'endommagement des équipements, voire de danger pour la sécurité de l'abonné.

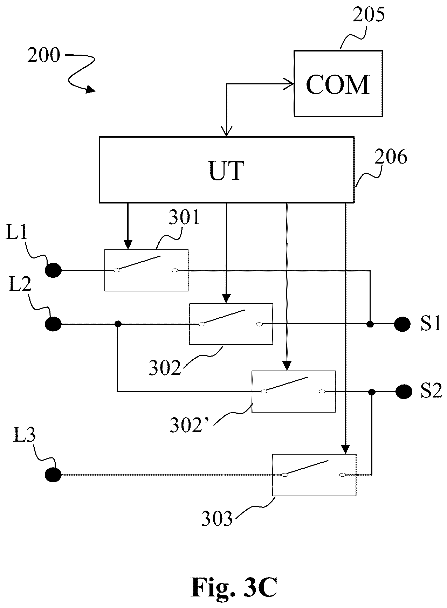

Selon un mode de réalisation particulier, par exemple tel qu'illustré en **Fig. 3C**, le dispositif d'équilibrage 200 est configuré pour connecter à plusieurs phases d'entrée à plusieurs phases de sortie S1, S2 d'un point de raccordement polyphasé d'un abonné. Dans ce cas, chaque phase de sortie S1, S2 peut être connectée à une phase d'entrée L1, L2 ou L3. Il est à noter qu'une seule phase d'entrée du réseau électrique peut être connectée *via* différents relais à plusieurs phases de sortie distinctes. Plus particulièrement, le dispositif d'équilibrage 200 est configuré pour connecter deux phases de sortie S1 et S2 d'un point de raccordement biphasé d'un abonné à deux phases d'entrée d'un réseau électrique polyphasé. Dans cet exemple, le dispositif d'équilibrage 200 est connecté à un réseau électrique triphasé comprenant les trois phases L1, L2 et L3, mais sans neutre. La première phase de sortie S1 peut être connectée à une phase d'entrée du réseau électrique triphasé choisie parmi un ensemble de phases d'entrée comprenant une première phase d'entrée L1 et une deuxième phase d'entrée L2. La deuxième phase de sortie S2 peut être connectée à une phase d'entrée du réseau électrique triphasé choisie parmi un ensemble de phases d'entrée comprenant une troisième phase d'entrée L3 et la deuxième phase d'entrée L2.

Selon cet exemple, deux relais doivent être fermés pour connecter une tension phase d'entrée-phase de sortie. Pour cela, afin de connecter chaque phase de sortie S1 et S2 à une phase d'entrée choisie parmi un ensemble de phases d'entrée prédéterminé, un des relais 301, 302, 302', 303 doit être fermé. Par exemple, pour connecter la première phase de sortie S1 à la première phase d'entrée L1, le relais 301 auquel est connectée la première phase d'entrée L1 est fermé, alors que le relais 302 auquel est connectée la deuxième phase d'entrée L2 est ouvert. Pour connecter la deuxième phase de sortie S2 à la troisième phase d'entrée L3, le relais 303 auquel est connectée la troisième phase d'entrée L3 est fermé, alors que le relais 302' auquel est connectée la deuxième phase d'entrée L2 est ouvert.

Ainsi, dans le cas par exemple d'une habitation câblée en triphasé, il est possible de raccorder chacune des trois phases d'entrée L1, L2 et L3 du réseau électrique à chacune des trois phases de sortie d'un point de raccordement triphasé de l'habitation. Pour cela, il faut utiliser soit un dispositif d'équilibrage 200 comprenant neuf relais (i.e., trois relais pour chaque phase d'entrée du réseau électrique triphasé), soit trois dispositifs d'équilibrage 200, un dispositif d'équilibrage 200 pour chaque phase d'entrée L1, L2, L3 du réseau électrique triphasé.

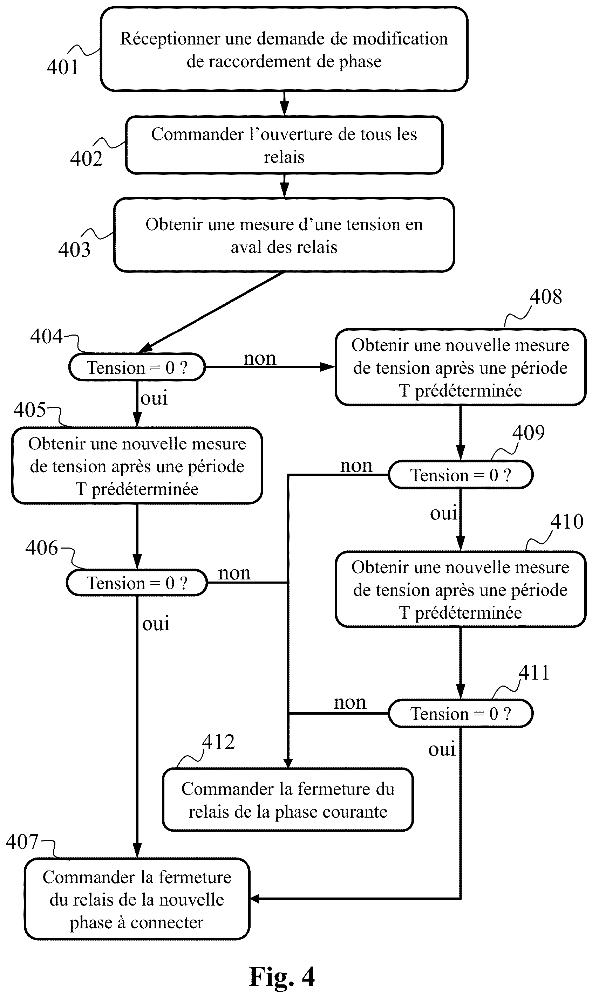

La **Fig.4** illustre schématiquement les étapes du procédé d'équilibrage des charges d'un réseau électrique polyphasé, selon un mode de réalisation. Tout ou partie du procédé d'équilibrage est mis en œuvre (ou implémenté) dans le dispositif d'équilibrage 200 tel que décrit précédemment, selon l'un ou l'autre ou une combinaison des modes de réalisation décrits.

Au cours d'une étape 401, le dispositif d'équilibrage 200 reçoit, *via* son module de communication COM 205, en provenance du système d'information SI directement ou *via* le concentrateur de données DC, un ordre de modification de raccordement au réseau électrique. Cet ordre est, par exemple, transmis au dispositif d'équilibrage 200 sous la forme d'un message comprenant une demande de modification de raccordement de phase.

Pour cela, les compteurs électriques C1 à Cn mesurent en temps réel une tension de chacune des phases d'entrée L1, L2, L3 du réseau électrique en amont des relais du dispositif d'équilibrage 200. Dans une variante, les compteurs électriques C1 à Cn obtiennent en temps réel une tension de chacune des phases d'entrée L1, L2, L3 du réseau électrique en amont des relais du dispositif d'équilibrage 200. C'est le cas, par exemple, lorsque le dispositif d'équilibrage 200 est configuré pour mesurer en temps réel une tension de chacune des phases d'entrée L1, L2, L3 du réseau électrique en amont des relais.

Cette mesure de tension est transmise par les compteurs électriques C1 à Cn directement au système d'information SI, ou *via* le concentrateur de données DC. Le fournisseur d'électricité possède donc en temps réel des informations concernant la consommation en chaque point de raccordement au réseau électrique. Ainsi, le fournisseur d'électricité est capable de détecter un déséquilibre des charges du réseau électrique. Le fournisseur d'électrique peut donc gérer à distance la permutation d'une ou des premières phases auxquelles est initialement connecté le point de raccordement de l'abonné vers une ou des deuxièmes phases pour équilibrer les charges du réseau électrique.

Ainsi, si le déséquilibre des charges dépasse un seuil prédéterminé, alors, afin de rééquilibrer les charges du réseau électrique, le système d'information SI envoie au dispositif d'équilibrage 200 une demande de modification de raccordement de phase pour changer la phase d'entrée à laquelle une phase de sortie d'un point de raccordement est initialement connectée.

Selon un mode de réalisation, cette demande de modification de raccordement de phase comprend notamment une information représentative d'une identité d'une nouvelle phase d'entrée (e.g., identifiant de la phase d'entrée) à laquelle connecter une phase de sortie S, S1, S2. Ainsi, le dispositif d'équilibrage 200 peut modifier le raccordement courant de la phase de sortie S, S1, S2 en passant d'une connexion à une phase d'entrée L1, L2, L3 à laquelle est initialement connectée la phase de sortie S, S1, S2, à une nouvelle phase d'entrée L1, L2, L3 identifiée dans la demande de modification de raccordement de phase.

Le module de communication COM 205 transmet ensuite au module de traitement UT 206 cette demande de modification de raccordement de phase. Le module de traitement UT 206 commande alors le changement de phase d'entrée à laquelle la phase de sortie S, S1, S2 est connectée à l'instant t (i.e., au moment de la réception de la demande de modification de raccordement de phase).

Pour cela, au cours d'une étape 402, le module de traitement UT 206 commande l'ouverture de tous les relais 301, 302, 302', 303 du dispositif d'équilibrage 200. Pour cela, un signal de commande d'ouverture est envoyé par le module de traitement UT 206 à tous les relais 301, 302, 302', 303 du dispositif d'équilibrage 200.

Afin de garantir la sécurité électrique, un contrôle pour vérifier que tous les relais 301, 302, 302', 303 sont bien ouverts est nécessaire avant de refermer le ou les nouveaux relais 301, 302, 302', 303. Ce contrôle consiste à vérifier qu'il n'y a pas de tension en aval des relais ouverts.

Ainsi, au cours d'une étape 403, une première mesure de tension en aval des relais 301, 302, 302', 303 est obtenue. Au cours d'une étape 404, le dispositif d'équilibrage 200 détermine si la tension mesurée est nulle. Si la tension mesurée est nulle (réponse « oui » à l'issue de l'étape 404), alors au cours d'une étape 405, le dispositif d'équilibrage 200 obtient, à l'issue d'une période T prédéterminée, une deuxième mesure de la tension en aval des relais 301, 302, 302', 303.

Cette nouvelle mesure (i.e., deuxième mesure) de la tension en aval des relais 301, 302, 302', 303 peut être réalisée à la période du signal soit 20ms (réseau électrique de 50Hz) ou 16,7ms (réseau électrique de 60Hz) ou à la seconde. Selon un mode de réalisation préféré, afin de minimiser le temps de coupure de l'électricité, la mesure est effectuée à la période du signal soit 20ms (signal 50Hz) ou 16,7ms (signal 60Hz). Ainsi, selon un mode de réalisation préféré, la période T prédéterminée est, par exemple de 20ms ou 16,7ms.

Au cours d'une étape 406, le dispositif d'équilibrage 200 détermine si la tension mesurée est nulle. Si la tension mesurée est nulle (réponse « oui » à l'issue de l'étape 406), alors le module de traitement UT 206 commande, au cours d'une étape 407, la fermeture du relais permettant la connexion de la phase de sortie S, S1, S2 à la nouvelle phase d'entrée L1, L2, L3 du réseau électrique.

Au contraire, si à l'issue de l'étape 404, la tension mesurée en aval des relais est différente de 0 (i.e., tension non nulle), alors le dispositif d'équilibrage 200 obtient au cours d'une étape 408, une nouvelle mesure (i.e., deuxième mesure) à l'issue de la période T prédéterminée. Si au cours d'une étape 409 le dispositif d'équilibrage 200 détermine que la tension mesurée est nulle (réponse « oui » à l'issue de l'étape 409), alors une nouvelle mesure (i.e., troisième mesure) est obtenue par le dispositif d'équilibrage 200 à l'issue de la période T prédéterminée dans une étape 410. Puis, si au cours d'une étape 411, la tension mesurée est nulle (réponse « oui » à l'issue de l'étape 411), alors le module de traitement UT 206 commande la fermeture du relais permettant la connexion de la phase de sortie S, S1, S2 à la nouvelle phase d'entrée L1, L2, L3 du réseau électrique (étape 407).

Au contraire, si à l'issue des étapes 409 ou 411 la tension mesurée est différente de 0 (réponse « non » à l'issue de l'étape 409 ou réponse « non » à l'issue de l'étape 411), alors le module de traitement UT 206 du dispositif d'équilibrage 200 commande, au cours d'une étape 412, la fermeture du relais permettant la connexion de la phase de sortie S, S1, S2 à la phase d'entrée L1, L2, L3 courante c'est-à-dire initialement connectée à la phase de sortie S, S1, S2.

Ainsi, si une tension est détectée en aval des relais 301, 302, 302',303, le dispositif d'équilibrage 200 referme le ou les relais qu'il vient d'ouvrir. Si deux mesures consécutives sont bien à zéro (sur les trois mesures réalisées), le(s) nouveau(x) relai(s) sont fermés, sinon c'est qu'il y a eu un défaut de commande, le dispositif d'équilibrage 200 referme alors les relais qui étaient fermés avant la réception de la demande de modification de raccordement de phase.

Selon un mode de réalisation, le dispositif d'équilibrage transmet au système d'information SI un message d'alerte comprenant une information représentative d'un défaut de commande des relais.

Il est à noter que, dans le cas d'un réseau électrique à 60Hz, le temps de coupure total de l'électricité est compris entre 43,34ms et 70ms. En effet, en général, le temps de commande des relais est de 20ms. Le relais change d'état (ouverture ou fermeture physique) entre 10 à 20ms, après réception d'un signal de commande d'ouverture ou de fermeture. Dans le cas où le réseau électrique polyphasé est un réseau électrique à 60Hz avec prise de mesure de la tension à la période du signal soit 16,7ms, le premier relais s'ouvre 10ms après réception du signal de commande d'ouverture, la première mesure de tension effectuée après la fin de l'ouverture du premier relais n'est pas nulle. Il faut donc attendre deux mesures supplémentaires de la tension à zéro pour commander la fermeture du deuxième relais. Dans le pire cas, le deuxième relais se ferme 20ms après réception de la commande de fermeture. La durée de coupure du courant électrique est donc de 3 x 16,67 + 20 = 70ms.

Dans un autre exemple, le premier relais s'ouvre 20ms après réception de la commande d'ouverture. La première mesure de tension effectuée après la fin de l'ouverture du premier relais est donc nulle. Il faut donc attendre une seule mesure supplémentaire de la tension à zéro pour commander la fermeture du deuxième relais. Dans le meilleur cas, le deuxième relais se ferme 10ms après réception de la commande de fermeture. La durée de coupure du courant électrique est donc de 2 x 16,67 + 10 = 43,34ms.

Ces temps sont très courts et la majorité des équipements domestiques ou industriels supportent cette microcoupure sans être impactés. Une réserve d'énergie pourrait toutefois être ajoutée à l'entrée de l'habitation ou l'entreprise (e.g., derrière le disjoncteur), afin de maintenir les charges alimentées pendant la coupure.

Selon un mode de réalisation, le dispositif d'équilibrage 200 est intégré dans un compteur électrique monophasé ou polyphasé.

Selon un autre mode de réalisation, le dispositif d'équilibrage 200 est sous forme de boitier de relais commandable à distance. Dans l'installation électrique de l'abonné, ce boitier se trouve entre le réseau électrique polyphasé et le compteur monophasé ou polyphasé de l'abonné à l'entrée du foyer ou de l'entreprise. Ce boitier est distinct du compteur électrique de l'abonné et comprend sa propre alimentation.

Ce boitier peut être alors commandé directement par le système d'information SI du fournisseur d'électricité ou par le compteur monophasé ou polyphasé de l'abonné.

Le module de communication COM 205 peut être du type filaire ou sans fil. Ce module de communication COM 205 peut être CPL, Radio Fréquence, cellulaire, wMBus, RS485 (avec protocole tel que ModBus par exemple), MBus, port entrée P1, port entrée TIC, ...

Comme décrit précédemment, lors du changement de raccordement à une nouvelle phase d'entrée, le boitier coupe la charge et donc également le compteur électrique monophasé ou polyphasé pendant moins de 100ms. Cette coupure n'est pas gênante pour le compteur électrique qui supporte des coupures jusqu'à 500ms. Le compteur électrique ne sera donc pas coupé, même si la charge l'est.

Selon un mode de réalisation particulier, comme décrit précédemment, le compteur électrique de l'installation électrique de l'abonné peut mesurer la tension de chacune des phases du réseau électrique polyphasé. Ainsi, s'il détecte une coupure de tension sur la phase d'entrée du réseau électrique à laquelle le point de raccordement de l'installation électrique de l'abonné est connecté, il peut de façon autonome (i.e. sans faire remonter l'information au système d'information SI) transmettre une demande de modification de raccordement de phase au dispositif d'équilibrage 200 pour faire permuter la connexion vers une autre phase d'entrée du réseau électrique polyphasé avec de la tension. Dès qu'il détecte le retour de tension sur la phase d'entrée à laquelle le point de raccordement était précédemment connecté, le compteur reconnecte cette phase d'entrée *via* le dispositif d'équilibrage 200.

## Revendications

1. Procédé d'équilibrage des charges d'un réseau électrique comprenant une pluralité de phases (L1, L2, L3), chaque phase alimentant en énergie électrique au moins un point de raccordement adapté pour raccorder une installation électrique d'un abonné audit réseau électrique, **caractérisé en ce que** ledit procédé est implémenté dans un dispositif d'équilibrage (200) connecté à ladite pluralité de phases (L1, L2, L3), ledit dispositif d'équilibrage (200) comprenant une pluralité de relais électromécaniques (301, 302, 302', 303), chaque relais électromécanique (301, 302, 302', 303) étant adapté pour connecter une phase de ladite pluralité de phases à une phase de sortie (S) dudit point de raccordement, ladite phase de sortie (S) étant destinée à fournir l'énergie électrique à l'installation électrique de l'abonné, et **en ce que** ledit procédé comprend : après réception, *via* un module de communication (COM), d'une demande de modification de raccordement de phase, commander une étape de modification de raccordement de phase pour basculer d'un raccordement, *via* un premier relais électromécanique (301, 302, 302', 303), à une première phase à laquelle est initialement connectée ladite phase de sortie (S), à un raccordement, *via* un deuxième relais électromécanique (301, 302, 302', 303), de ladite phase de sortie (S) à une deuxième phase dudit réseau électrique ;
ladite étape de modification de raccordement de phase comprend :
- commander une ouverture de tous les relais électromécaniques (301, 302, 302', 303) dudit dispositif d'équilibrage (200),
- obtenir une première mesure d'une tension en aval des relais électromécaniques (301, 302, 302', 303), puis, après une période (T) prédéterminée, obtenir une deuxième mesure d'une tension en aval des relais électromécaniques (301, 302, 302', 303),
- obtenir une troisième mesure d'une tension en aval des relais électromécaniques (301, 302, 302', 303) à l'issue de la période (T) prédéterminée, lorsque ladite première mesure est différente de 0 et ladite deuxième mesure est égale à 0,
- commander une fermeture dudit deuxième relais électromécanique (301, 302, 302', 303) si :
(i) ladite première mesure est égale à 0 et ladite deuxième mesure est égale à 0, ou
(ii) ladite première mesure est différente de 0, ladite deuxième mesure est égale à 0 et ladite troisième mesure est égale à 0 ;
- commander une fermeture dudit premier relais électromécanique (301, 302, 302', 303) si :
(i) ladite première mesure est différente de 0 et ladite deuxième mesure est différente de 0, ou
(ii) ladite première mesure est différente de 0, ladite deuxième mesure est différente de 0 et ladite troisième mesure est différente de 0.

2. Procédé selon la revendication 1, **caractérisé en ce que** ladite période (T) prédéterminée est de 20 ms lorsque ledit réseau électrique a une fréquence de 50Hz ou 16,7 ms lorsque ledit réseau électrique a une fréquence de 60Hz ou une seconde, préférentiellement de 20 ms lorsque ledit réseau électrique a une fréquence de 50Hz ou 16,7 lorsque ledit réseau électrique a une fréquence de 60Hz.

3. Procédé selon l'une quelconque des revendications 1 et 2, **caractérisé en ce que** commander une fermeture dudit premier relais électromécanique (301, 302, 302', 303) comprend en outre : transmettre un message d'alerte à un système d'information (SI) d'un fournisseur d'électricité.

4. Dispositif d'équilibrage des charges d'un réseau électrique comprenant une pluralité de phases (L1, L2, L3), chaque phase alimentant en énergie électrique au moins un point de raccordement adapté pour raccorder une installation électrique d'un abonné audit réseau électrique, **caractérisé en ce que** ledit dispositif d'équilibrage (200) est connecté à ladite pluralité de phases (L1, L2, L3), ledit dispositif d'équilibrage (200) comprenant une pluralité de relais électromécaniques (301, 302, 302', 303), chaque relais électromécanique (301, 302, 302', 303) étant adapté pour connecter une phase de ladite pluralité de phases à une phase de sortie (S) dudit point de raccordement, ladite phase de sortie (S) étant destinée à fournir l'énergie électrique à l'installation électrique de l'abonné, **et en ce que** ledit dispositif d'équilibrage (200) comprend de la circuiterie électronique configurée pour : après réception, *via* un module de communication (COM), d'une demande de modification de raccordement de phase, commander une étape de modification de raccordement de phase pour basculer d'un raccordement, *via* un premier relais électromécanique (301, 302, 302', 303), à une première phase à laquelle est initialement connectée ladite phase de sortie (S), à un raccordement, *via* un deuxième relais électromécanique (301, 302, 302', 303), de ladite phase de sortie (S) à une deuxième phase dudit réseau électrique,
ladite étape de modification de raccordement de phase comprend :
- commander une ouverture de tous les relais électromécaniques (301, 302, 302', 303) dudit dispositif d'équilibrage (200),
- obtenir une première mesure d'une tension en aval des relais électromécaniques (301, 302, 302', 303), puis, après une période (T) prédéterminée, obtenir une deuxième mesure d'une tension en aval des relais électromécaniques (301, 302, 302', 303),
- obtenir une troisième mesure d'une tension en aval des relais électromécaniques (301, 302, 302', 303) à l'issue de la période (T) prédéterminée, lorsque ladite première mesure est différente de 0 et ladite deuxième mesure est égale à 0,
- commander une fermeture dudit deuxième relais électromécanique (301, 302, 302', 303) si :
(i) ladite première mesure est égale à 0 et ladite deuxième mesure est égale à 0, ou
(ii) ladite première mesure est différente de 0, ladite deuxième mesure est égale à 0 et ladite troisième mesure est égale à 0.
- commander une fermeture dudit premier relais électromécanique (301, 302, 302', 303) si :
(i) ladite première mesure est différente de 0 et ladite deuxième mesure est différente de 0, ou
(ii) ladite première mesure est différente de 0, ladite deuxième mesure est différente de 0 et ladite troisième mesure est différente de 0.

5. Compteur électrique comprenant un dispositif d'équilibrage (200) selon la revendication 4.

6. Produit programme d'ordinateur, comportant des instructions entraînant l'exécution, par un processeur, du procédé selon l'une quelconque des revendications 1 à 3, lorsque lesdites instructions sont exécutées par le processeur.

7. Support de stockage, stockant un programme d'ordinateur comportant des instructions entraînant l'exécution, par un processeur, du procédé selon l'une quelconque des revendications 1 à 3, lorsque lesdites instructions sont lues depuis le support de stockage et exécutées par le processeur.
